# EUROPEAN PATENT APPLICATION

(11) **EP 0 720 404 A2**
(43) Date of publication of application: **03.07.1996**
(21) Application number: 95309096.6
(22) Date of filing: 13.12.1995
(51) Int. Cl.: H04Q 7/32, H04M 1/72

(54) **Wireless telephone module**

(30) Priority: 30.12.1994 US 367368
(71) Applicant: AT&T Corp., New York, NY 10013-2412 (US)
(72) Inventor: Benjamin, O'Connel Julien, Marlboro, NJ 07746 (US); Clarke, John Edward, Colts Neck, NJ 07733 (US); Garner, William J., Yardley, PA 19067 (US)
(74) Representative: Buckley, Christopher Simon Thirsk

(57) **Abstract**

A wireless (e.g., cellular) telephone module (10) includes the control circuitry for the telephone (40), and can be inserted into one of a number of different telephones, allowing the user to transfer his telephone service, and telephone number, to the different telephones. The wireless telephone includes: an input device (44) for inputing information into the telephone; an antenna for transmitting and receiving signals to and from a telephone network, the network enabling the telephone to be connected to other telephones; a control circuit (in 10) for controlling the generation of a signal for transmission to the network, the signal including information input into the telephone using the input device; and a removable module (10) containing the control circuit to enable the control circuit to be removed from the telephone.

## Description

### Background of the Invention

Wireless telephones, such as cellular telephones, have gained wide popularity in recent years since they provide a full range of telephone services at almost any location. For example, car telephones have improved the safety of automobile travel since emergency assistance can be quickly called in the event of an accident or failure of the automobile. Business travelers also find that the use of car telephones assist them in their ability to conduct business when driving or stuck in traffic.

One limitation to traditional car telephones is that the telephone is installed in the car at considerable cost to the consumer. The installation involves attaching an antenna to the car and installing wiring, etc., possibly including the popular "hands-free" microphone feature. This installation involves labor to hide the wiring, etc. and this cost is usually passed to the consumer.

Another disadvantage of a car telephone is that, after installation, it is attached to the car. A person who is travelling by another mode of transportation (e.g., by train) is not able to bring his car telephone with him. Similarly, for the person that has several cars, it can be expensive to maintain separate telephones in each, since each telephone will require its own service from a cellular telephone company. Also, each telephone will have its own telephone number, making it difficult for others to locate the owner of the telephones.

To solve the problems associated with car telephones, portable telephones were developed and have also become widely used. These telephones are available in both high and low power models. The low power models are compact and lightweight, and can fit into a user's pocket, but have a limited power capability of 0.6 watts. In areas where the signal from the telephone must be transmitted over a long distance to one of the cellular network's cells, this power limitation can result in poor transmission quality.

The high-power portable telephones have a handset and a separate base unit that can transmit at up to 3.0 watts. The disadvantage of the high-power portable is that it is significantly larger and heavier than the low power portables.

Thus, traditional car telephones, high power portables and low power portables each have certain advantages and disadvantages. The difficulty to the consumer is deciding which is most appropriate for his or her needs.

### Summary of the Invention

The disadvantages associated with the prior art have been overcome by the present invention which features a telephone module that includes the control circuitry for a telephone. The module can be inserted into one of a number of different telephones, allowing the user to transfer his telephone service, and telephone number, to the different telephones. The user can therefore select the telephone option that best suits his current needs, and insert the module in that telephone.

Furthermore, since the control circuitry is contained in the portable module, an automobile manufacturer can install the remaining components of the telephone in the car while in the factory, significantly reducing labor and eliminating the expensive installation charges normally associated with car telephones. When the car is purchased the new owner simply inserts his module in the car, and his service (with his old number) is now active in his new car.

In one aspect, the invention features a wireless telephone including: an input device for inputing information into the telephone; an antenna for transmitting and receiving signals to and from a telephone network, the network enabling the wireless telephone to be connected to other telephones; a control circuit for controlling the generation of a signal for transmission to the network, the signal including information input into the telephone using the input device; and a removable module containing the control circuit to enable the control circuit to be removed from the telephone.

In the preferred embodiments, the module comprises a plurality of sliding electrical contacts, the electrical contacts connected to the control circuit contained in the module. The telephone includes a housing having an opening for receiving the module, and a plurality of sliding electrical contacts that will mate with the sliding electrical contacts on the module when the module is inserted into the opening to connect the control circuit to the input device and to the antenna.

The preferred wireless telephone is a cellular telephone. The input device can be a keypad that can be used to enter telephone numbers associated with a desired telephone to be connected to the cellular telephone over the cellular telephone network. The input device can also include a microphone that can be used to enter voice signals.

The preferred control circuit is a baseband circuit. The telephone may also include an RF circuit, the RF circuit preferably located in the module with the control circuit.

The signal can also include identification information that identifies to the network a unique telephone customer account. The identification information is also preferably unique to the control circuit such that the telephone network can distinguish the module from other modules that control information transmitted to the network.

In another aspect, the invention features a wireless telephone module that can be connected to a wireless telephone, the wireless telephone providing a user access to a telephone network, the module comprising: a control circuit for receiving information from a user and generating a signal to be transmitted to the telephone network; a connector for enabling the module to be removably connected to a telephone housing, the connector being capable of providing an electrical connection between the control circuit and other circuits contained in the telephone housing.

Other advantages and features of the present invention will be apparent to those of skill in this art in view of the following detailed description of the preferred embodiments of the invention.

### Brief Description of the Drawings

Fig. 1 is a perspective view of a cellular telephone module according to one embodiment of the invention.

Fig. 2 is a block diagram illustrating the circuitry used in the cellular telephone module shown in Fig. 1, and other circuitry associated with a standard cellular telephone.

Fig. 3 is a perspective view of the cellular telephone module of Fig. 1 inserted in a car telephone apparatus.

Fig. 4 is a side view of the apparatus shown in Fig. 3. Fig. 5 is a perspective view of a low-power portable cellular telephone having the cellular telephone module of Fig. 1 inserted therein.

Fig. 6 is a perspective view of a high-power portable cellular telephone having the cellular telephone module of Fig. 1 inserted therein.

### Detail Description of the Preferred Embodiments

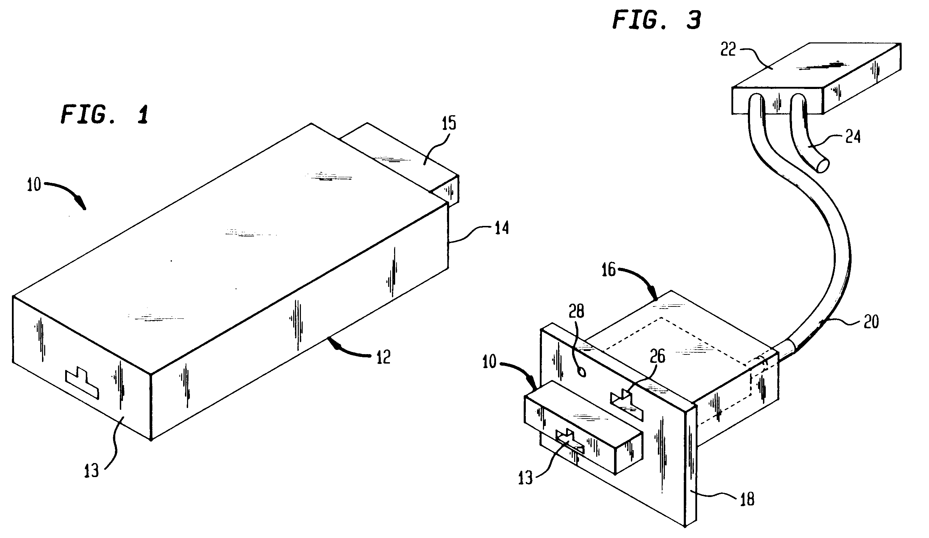

Referring to Fig. 1, a cellular telephone module 10 is illustrated and includes a housing 12 that encloses circuitry forming a portion of a cellular telephone, as described in more detail below. Housing 12 includes a front surface 13 and a rear surface 14. An electrical connector 15 protrudes from rear surface 14 of housing 12.

As is explained in more detail below, module 10 can be inserted into a housing that has connected thereto the remaining components of the cellular telephone (i.e., those components not included within module 10). These remaining components are connected to the circuits in module 10 through connector 15, resulting in a fully operational cellular telephone.

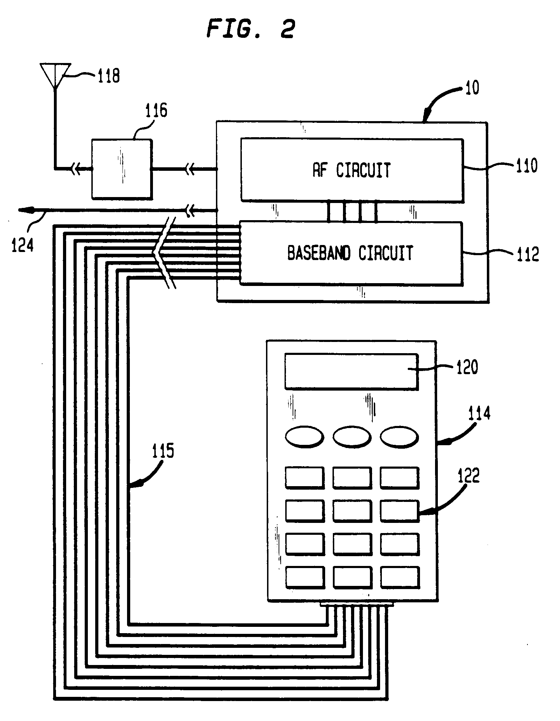

Fig. 2 is a block diagram showing the electronic components of module 10, along with the remaining components of a standard cellular telephone. Module 10 is represented in Fig. 2 by box 10, and includes an RF circuit 110 and a baseband circuit 112. The other components of the cellular telephone include a handset 114, booster 116 and antenna 118. Handset 114 includes an LCD display 120, and keys 122 for entering telephone numbers and other information. Also included in handset 114 are a standard microphone and speaker (not shown). A power line 124 is connected to an appropriate voltage source. Handset 114 is connected to module 10 by appropriate wiring 115.

As is well known in this art, in a cellular telephone the baseband and RF circuits carry out the transmission and reception functions for the telephone. Specifically, baseband circuit 112 includes the control circuitry for the telephone and includes a microprocessor, memory and decoder circuits. Baseband circuit 112 functions to receive voice and alphanumeric data (e.g., DTMF signals) from the user, and configures this information into a signal that is sent to RF circuit 110. The RF circuit 110 modulates an RF carrier in accordance with the baseband signal received from baseband circuit 112 to generate a modulated RF signal for transmission to the cellular network using antenna 118.

Baseband circuit 112 controls the operation of the telephone and "recognizes" signals sent from the cellular network that are intended for the telephone it is controlling (i.e., calls sent to the particular unique telephone number assigned to the module). Similarly, information to be sent to the cellular network is configured by baseband circuit 112 to include data identifying the sending module so that the cellular network can identify the source of the transmission and properly route the call.

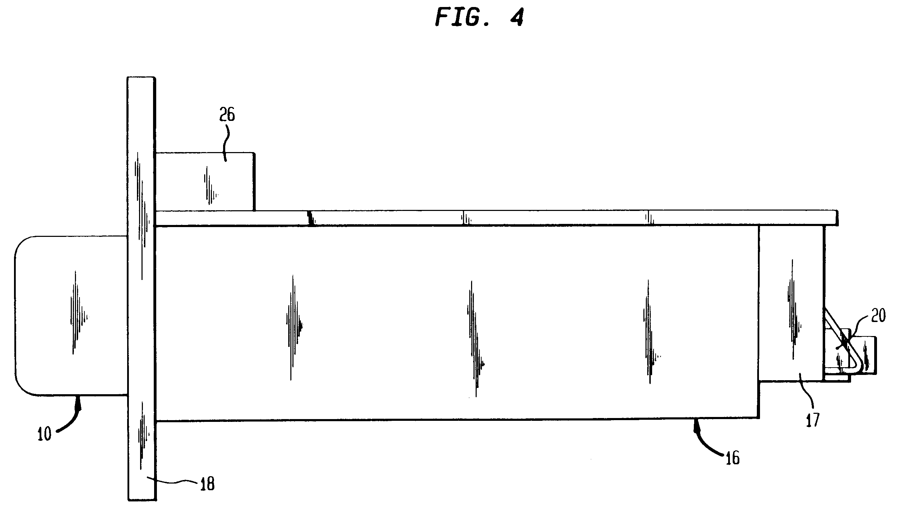

Figs. 3 and 4 illustrate module 10 inserted into an automobile telephone receptacle 16, which is attached to the rear of an instrument panel 18 of an automobile. (Only a portion of the automobile's instrument panel is shown in the figures.) Receptacle 16 has a connector 17 (not shown in Fig. 3) that receives connector 15 on module 10. Connectors 15 and 17 include standard contacts that mate when module 10 is inserted. Cable 20 connects receptacle 16 with a booster 22 (see Fig. 3), which is connected to an antenna (not shown) via cable 24.

A handset jack 26 and a microphone jack 28 are located on the front of instrument panel 18 and are electrically connected to receptacle 16. The handset can include a microphone, making microphone jack 28 unnecessary. The microphone can also be prewired to receptacle 16 and electrically connected to module 10 through connector 15. A data port 13 is located on the front of module 10 and can be used to connect the module with, e.g., a personal computer or facsimile machine.

When module 10 is inserted into receptacle 16, the circuits in module 10 (i.e., the RF and baseband circuits) are connected to the other components of the cellular telephone to form a complete telephone that can be used like a standard car telephone (once the handset and microphone are plugged into the appropriate jacks).

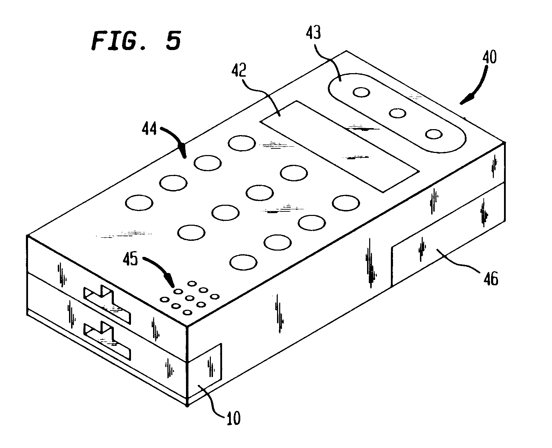

Referring to Fig. 5, a low-power portable telephone 40 is illustrated into which module 10 has been inserted. Telephone 40 includes standard components, including a display 42, speaker 43, alphanumeric keys 44, microphone 45 and a battery 46.

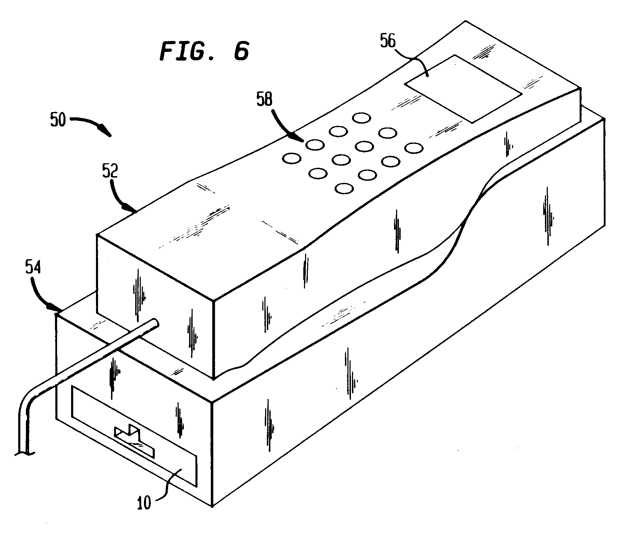

Fig. 6 illustrates a high-power portable telephone 50 into which cellular module 10 has been inserted. Telephone 50 includes a handset 52 and a base 54. Handset 52 includes display 56 and alphanumeric keys 58. As is well known, base 54 includes a high-power booster to enable transmission at 3.0 watts. Other standard components of portable telephone 50 , e.g., an appropriate microphone and speaker, are not shown in Fig. 6.

Accordingly, cellular module 10 can be inserted into various types of cellular telephones to enable a user to choose the cellular telephone option that is most suitable to his or her current needs. The user will not have to maintain several cellular services concurrently, and need have only one telephone number. Since the telephone control circuits are contained within the module 10, the cellular network will treat the various cellular telephones shown in Fig.s 3-6 as one telephone.

As noted above, another significant advantage of the module of the invention is that car manufacturers can install most of the components of the cellular telephone in the factory, with the user simply inserting his or her module into the car after it has been purchased. This eliminates the cost associated with having cellular telephones installed in the cars after purchase.

Furthermore, when a person borrows or rents a car, he or she can insert their module into that car and can receive and send calls using their own service and telephone number.

It should be understood that various modifications can be made to the embodiments described above, and that these embodiments are for illustrative purposes only. For example, the RF circuit need not be in the module, but could be located in the car, etc. Module 10 can contain only those circuits that identify the user's cellular service, i.e., that are associated with the user's telephone number. Also, the invention is applicable to any wireless telephone system, and need not be limited to a cellular system.

Furthermore, the location of the components in the automobile is not critical and unit 10 can be located, e.g., under the car seat, in the trunk, etc. Similarly, the location and construction of handset 114 can vary. The components of handset 114 can be integrated, e.g., into the car radio. Voice recognition can also be used instead of input keys. Various other embodiments of the present invention can be made within the scope and spirit of the appended claims.

## Claims

1. A wireless telephone comprising:
an input device for inputing information into said telephone;
an antenna for transmitting and receiving signals to and from a telephone network, said network enabling said telephone to be connected to other telephones;
a control circuit for controlling the generation of a signal for transmission to said network, said signal including information input into said telephone using said input device; and
a removable module containing said control circuit to enable said control circuit to be removed from said telephone.

2. The telephone of claim 1 wherein said module comprises a plurality of sliding electrical contacts, said electrical contacts connected to said control circuit contained in said module.

3. The telephone of claim 2 wherein said telephone further comprises a housing including an opening for receiving said module, and a plurality of sliding electrical contacts that will mate with said sliding electrical contacts on said module when said module is inserted into said opening to connect said control circuit to said input device and to said antenna.

4. The telephone of claim 1 wherein said input device is a keypad that can be used to enter telephone numbers associated with a desired telephone to be connected to said wireless telephone over the telephone network.

5. The telephone of claim 1 wherein said input device is a microphone that can be used to enter voice signals.

6. The telephone of claim 1 wherein said control circuit is a baseband circuit.

7. The telephone of claim 6 further comprising an RF circuit, said RF circuit located in said module with said baseband circuit.

8. The telephone of claim 1 wherein said telephone is a cellular telephone.

9. The telephone of claim 1 wherein said signal further comprises identification information that identifies to said network a unique telephone customer account.

10. The telephone of claim 1 wherein said signal further comprises identification information unique to said control circuit such that said telephone network can distinguish said module from other modules that control information transmitted to said network.

11. A wireless telephone module that can be connected to a wireless telephone, said wireless telephone providing a user access to a telephone network, said module comprising:
a control circuit for receiving information from a user and generating a signal to be transmitted to the telephone network; and
a connector for enabling said module to be removably connected to a telephone housing, said connector being capable of providing an electrical connection between said control circuit and other circuits contained in said telephone housing.

12. The module of claim 11 wherein said connector comprises a plurality of sliding electrical contacts, said electrical contacts connected to said control circuit contained in said module.

13. The module of claim 11 wherein said information comprises telephone numbers associated with a desired telephone to be connected to said wireless telephone over the telephone network.

14. The module of claim 11 wherein said information comprises voice signals.

15. The module of claim 11 wherein said control circuit is a baseband circuit.

16. The module of claim 11 further comprising an RF circuit.

17. The module of claim 11 wherein said telephone is a cellular telephone.

18. The module of claim 11 wherein said signal further comprises identification information that identifies to said network a unique telephone customer account.

19. The telephone of claim 11 wherein said signal further comprises identification information unique to said control circuit such that said telephone network can distinguish said module from other modules that control information transmitted to said network.

20. A cellular telephone comprising:
a telephone housing;
an input device electrically connected to said housing for inputing information from a user into said telephone;
an antenna electrically connected to said housing for transmitting and receiving signals to and from a telephone network, said network enabling said cellular telephone to be connected to other telephones;
a control circuit for controlling the generation of a signal for transmission to said network, said signal including information input using said input device;
a removable module containing said control circuit that can be seated in and removed from said telephone housing, said module including a plurality of sliding electrical contacts; and
a second plurality of sliding electrical contacts attached to said housing for receiving said sliding electrical contacts on said module when said module is seated in said housing to connect said control circuit to said antenna and said input device.

21. The telephone of claim 20 wherein said control circuit is a baseband circuit.

22. The telephone of claim 20 further comprising an RF circuit, said RF circuit located in said module with said control circuit.

23. The telephone of claim 20 wherein said signal further comprises identification information that identifies to said network a unique telephone customer account.

24. The telephone of claim 20 wherein said signal further comprises identification information unique to said control circuit such that said telephone network can distinguish said module from other modules that control information transmitted to said network.
